(19) Europäisches Patentamt
European Patent Office
Office européen des brevets

(11) Veröffentlichungsnummer : **0 178 529**
**B1**

# (12) EUROPÄISCHE PATENTSCHRIFT

(45) Veröffentlichungstag der Patentschrift : **29.07.87**

(21) Anmeldenummer : **85112440.4**

(22) Anmeldetag : **02.10.85**

(51) Int. Cl.⁴ : **C 08 K 3/32**, C 08 K 9/10, C 08 L 75/04, C 08 J 9/00, C 09 K 21/04

## (54) Hydrolysestabiles Flammschutzmittel auf der Basis von Ammoniumpolyphosphat.

(30) Priorität : **18.10.84 DE 3438094**
**20.07.85 DE 3526006**

(43) Veröffentlichungstag der Anmeldung : **23.04.86 Patentblatt 86/17**

(45) Bekanntmachung des Hinweises auf die Patenterteilung : **29.07.87 Patentblatt 87/31**

(84) Benannte Vertragsstaaten : **DE FR GB IT NL SE**

(56) Entgegenhaltungen :
**DE-A- 2 949 537**
**DE-A- 3 217 816**

(73) Patentinhaber : **HOECHST AKTIENGESELLSCHAFT**
**Postfach 80 03 20**
**D-6230 Frankfurt am Main 80 (DE)**

(72) Erfinder : **Staendeke, Horst, Dr.**
**Alte Honrather Strasse 22**
**D-5204 Lohmar (DE)**
Erfinder : **Michels, Eduard, Dr.**
**Neue Bohle 66**
**D-5040 Brühl (DE)**

EP 0 178 529 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung ist ein hydrolysestabiles, mikroverkapseltes Flammschutzmittel auf der Basis von freifließendem, pulverförmigem Ammoniumpolyphosphat und ein Verfahren zu seiner Herstellung.

Es ist generell bekannt, Ammoniumpolyphosphate als Flammschutzmittel für Kunststoffe zu verwenden. Beispielsweise beschreibt die Deutsche Auslegeschrift 12 83 532 ein Verfahren zur Herstellung von flammwidrigen Polyurethanen aus hochmolekularen Polyhydroxylverbindungen, Polyisocyanaten und Katalysatoren, wobei ein Ammoniumpolyphosphat der allgemeinen Formel

$$H_{(n-m)+2}(NH_4)_mP_nO_{3n+1}$$

in der n eine ganze Zahl mit einem über 10 liegenden Durchschnittswert ist, m eine ganze Zahl bis maximal n + 2 bedeutet und m/n zwischen etwa 0,7 und 1,1 liegt, als Flammschutzmittelzusatz vorgeschlagen wird.

Obgleich Ammoniumpolyphosphate der vorgenannten allgemeinen Formel beim Einsatz in Polyurethanen letzteren einen guten Flammschutz verleihen, sind sie mit dem Nachteil behaftet, daß sie nicht ausreichend wasserunlöslich sind und deshalb im Laufe der Zeit durch Witterungseinflüsse aus dem Kunststoff ausgewaschen werden. Wie aus Spalte 3 der DE-AS 12 83 532 ersichtlich, besitzen die dort als praktisch wasserunlöslich bezeichneten Ammoniumpolyphosphate dennoch eine beachtliche Löslichkeit in Wasser, indem beim Aufschlämmen von 10 g des Ammoniumpolyphosphats in 100 ml Wasser bei 25 °C bis zu 5 g des Ammoniumpolyphosphates gelöst werden, d. h. daß die löslichen Anteile des Ammoniumpolyphosphates bis zu 50 % der eingesetzten Menge betragen.

In den deutschen Offenlegungsschriften DE-OS 29 49 537 und DE-OS 30 05 252 werden Verfahren zur Herstellung von hydrolysestabilen, pulverförmigen Ammoniumpolyphosphaten durch Umhüllung mit Melamin/Formaldehyd-Harzen bzw. Phenol/Formaldehyd-Harzen beschrieben. In beiden Fällen wird durch diese Maßnahme die Wasserlöslichkeit im Vergleich zu unbeschichtetem Ammoniumpolyphosphat deutlich verringert.

Nachteilig bei der Verwendung als Flammschutzmittel ist jedoch, daß das Beschichtungsmaterial geringe Mengen an Formaldehyd freisetzt.

Schließlich wird in der DE-OS 32 17 816 die Herstellung von hydrolysestabilen, pulverförmigen Ammoniumpolyphosphaten durch Umhüllung mit gehärteten Epoxidharzen beschrieben. Allerdings ist der angestrebte Effekt der Verringerung der wasserlöslichen Anteile weniger ausgeprägt als bei den Melanin/Formaldehyd-Harzen.

Es bestand somit die Aufgabe, Mittel und Wege zur Verminderung der Löslichkeit von Ammoniumpolyphosphaten in Wasser zu finden, so daß die Gefahr des Auswaschens des Ammoniumpolyphosphates beim Einsatz als Flammschutzmittel in Kunststoffen sowie in Holz- oder Papierwerkstoffen durch Witterungseinflüsse möglichst weitgehend vermieden wird. Ferner soll sichergestellt sein, daß das Beschichtungsmaterial keine Schadstoffe freisetzt.

Es hat sich nunmehr gezeigt und war nicht vorhersehbar, daß der erfindungsgemäße Ersatz von Melamin- bzw. Phenolharzen durch Polycarbodiimide mit Vorteilen verbunden ist.

Somit betrifft die Erfindung ein Flammschutzmittel auf der Basis von freifließendem, pulverförmigem Ammoniumpolyphosphat der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 beträgt, welches dadurch gekennzeichnet ist, daß es aus

a) etwa 75 bis 99,5 Masse% Ammoniumpolyphosphat und

b) etwa 0,5 bis 25 Masse% eines Reaktionsproduktes aus einem Polyisocyanat und einem Carbodiimidisierungskatalysator, wobei das Polycarbodiimid die einzelnen Ammoniumpolyphosphatteilchen umhüllt,

besteht. Das Ergebnis dieser Erfindung ist ein hydrolysestabiles, mikroverkapseltes Flammschutzmittel.

Das Mittel der Erfindung besitzt im allgemeinen eine mittlere Teilchengröße von etwa 0,01 bis 0,1 mm und der Kondensationsgrad n des Ammoniumpolyphosphates ist vorzugsweise eine ganze Zahl mit einem Durchschnittswert von 450 bis 800, bestimmt nach dem Endgruppen-Titrations-Verfahren von « van Wazer, Griffiter und McCullough », Anal. Chem. 26, Seite 1755 (1954).

Entsprechend einer weiteren bevorzugten Ausführungsform des erfindungsgemäßen Mittels beträgt der Anteil des Polycarbodiimids 2 bis etwa 15 Masse%.

Das Polycarbodiimid ist ein Reaktionsprodukt, welches durch eine katalysierte Polykondensation aus Polyisocyanat entsteht. Der Begriff « Polyisocyanat » umfaßt alle handelsüblichen aromatischen und aliphatischen Di- und Polyisocyanate, wie sie z. B. für die Herstellung von Polyurethan-, Polyisocyanurat-oder Polycarbodiimidschäumen Verwendung finden.

Das erfindungsgemäße Verfahren zur Herstellung dieses hydrolysestabilen, mikroverkapselten Flammschutzmittels ist dadurch gekennzeichnet, daß man eine Suspension, welche aus einem Verdünnungsmittel und aus freifließendem, pulverförmigem Ammoniumpolyphosphat der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 beträgt, sowie aus einem Polyisocyanat und aus einem Carbodiimidisierungskatalysator besteht, während 0,5 bis 5 Stunden unter Rühren auf Temperaturen zwischen 30 bis 200 °C hält und anschließend abkühlt, filtriert und das nunmehr mit einem Polycarbodiimid mikroverkapselte Ammoniumpolyphosphat trocknet.

Im einzelnen besteht das Verfahren wahlweise darin, daß

a) man die Suspension aus Verdünnungsmittel und Ammoniumpolyphosphat vorlegt und dieser Suspension Lösungen des Polyisocyanates und anschließend des Carbodiimidisierungskatalysators in dem Verdünnungsmittel langsam zugibt ;

b) in der allgemeinen Formel des Ammoniumpolyphosphates n eine ganze Zahl mit einem Durchschnittswert von 450 bis 800 ist ;

c) als Verdünnungsmittel Lösemittel auf Basis aromatischer, aliphatischer oder cycloaliphatischer Kohlenwasserstoffe sowie aliphatischer, aromatischer und gemischtaliphatischer/aromatischer Ketone, vorzugsweise Aceton, eingesetzt werden ;

d) als Polyisocyanat handelsübliche aromatische oder aliphatische Di- und Polyisocyanate, vorzugsweise technisches 4,4'-Diphenylmethandiisocyanat (MDI), eingesetzt werden ;

e) als Carbodiimidisierungskatalysator phosphororganische, insbesondere cyclische phosphororganische Verbindungen, vorzugsweise 1-Methyl-1-oxo-phospholen, eingesetzt werden ;

f) in der Suspension ein Verhältnis von Ammoniumpolyphosphat : Verdünnungsmittel : Polyisocyanat : Carbodiimidisierungskatalysator wie 1 : 1,5-2,5 : 0,05-0,25 : 0,000 25-0,012 5 vorzugsweise wie 1 : 2 : 0,1 : 0,002, eingehalten wird ;

g) die Reaktionszeit 1 bis 2 Stunden bei Temperaturen zwischen 50 bis 100 °C beträgt ;

h) die Trocknung bei Temperaturen zwischen 80 bis 150 °C in Inertgasatmosphäre, vorzugsweise im Stickstoffstrom, erfolgt ;

i) die erreichte mittlere Teilchengröße des mikroverkapselten Ammoniumpolyphosphates als Flammschutzmittel zwischen 0,01 und 0,1 mm, vorzugsweise zwischen 0,03 und 0,06 mm, beträgt ; und

k) der Anteil des Polycarbodiimids im Flammschutzmittel 2 bis etwa 15 Masse% beträgt.

Schließlich betrifft die Erfindung auch die Verwendung des vorbeschriebenen Mittels zur flammwidrigen Einstellung von Polyurethanen bzw. Polyurethanschäumen, wobei der Gehalt des Mittels im Polyurethanschaum etwa 5 bis 25 Masse%, bezogen auf die Menge der Polyolkomponente des Polyurethans, beträgt.

Das Aufbringen der Polycarbodiimide auf die Ammoniumpolyphosphat-Teilchen kann in Lösungsmitteln auf Basis aromatischer, aliphatischer oder cycloaliphatischer Kohlenwasserstoffe oder in aliphatischen, aromatischen oder gemischtaliphatischen/aromatischen Ketonen unter Rühren der Ammoniumpolyphosphat/Polyisocyanat-Suspension erfolgen, wobei die katalysierte Polykondensationsreaktion unter Erwärmen durchgeführt wird.

Durch die erfindungsgemäße Umhüllung der Ammoniumpolyphosphat-Teilchen mit einem Polycarbodiimid wird die Löslichkeit des Ammoniumpolyphosphates in Wasser erheblich herabgesetzt, was sich günstig auswirkt, z. B. beim Einsatz eines derartig vorbehandelten Ammoniumpolyphosphates als Flammschutzmittel in Polyurethanschäumen.

Die Polycarbodiimide zeichnen sich als Beschichtungsmaterial für Ammoniumpolyphosphat gegenüber den bekannten Umhüllungsharzen Phenol/Formaldehyd-Harz und Epoxidharz durch eine höhere Verringerung der Wasserlöslichkeit und gegenüber den Melamin/Formaldehyd-Harzen und den Phenol/Formaldehyd-Harzen dadurch aus, daß sie keinen Formaldehyd freisetzen können.

Ferner weist die Polycarbodiimidbeschichtung gegenüber der Melamin/Formaldehyd-Harzbeschichtung den Vorteil der höheren Thermostabilität auf, was sich besonders positiv bei der Einarbeitung in Thermoplaste mit hohen Verarbeitungstemperaturen auswirkt.

Die erfindungsgemäßen Mittel, deren Herstellung und Vorteile werden in den nachfolgenden Beispielen erläutert. Zur Durchführung der in den Beispielen dargelegten Versuche wurden im Handel erhältliche Ammoniumpolyphosphate sowie verschiedene, ebenfalls handelsübliche Polyisocyanate und Carbodiimidisierungskatalysatoren eingesetzt. Im einzelnen handelt es sich hierbei um folgende Produkte :

1. ®Exolit 422, Hoechst Aktiengesellschaft, Frankfurt/Main. Es handelt sich um ein feinkörniges in Wasser schwer lösliches Ammoniumpolyphosphat, wobei der Kondensationsgrad n ~ 700 ist.

2. ®Caradate 30, Deutsche Shell Chemie GmbH, Frankfurt/Main.

Es handelt sich um ein Gemisch verschiedener aromatischer Di- und Triisocyanate mit 4,4'-Diphenylmethandiisocyanat als Hauptkomponente. Das Produkt ist eine Flüssigkeit von tiefbrauner bis schwarzer Farbe. Der Isocyanatgehalt liegt bei 30,2 % NCO. Die Dichte (bei 23 °C) beträgt 1,22-1,24 g/ml, die Viskosität (bei 25 °C) 160-240 mPa · s.

3. 1-Methyl-1-oxo-phospholen (Hoechst Aktiengesellschaft, Frankfurt/Main).

Es handelt sich um ein Isomerengemisch der Verbindungen

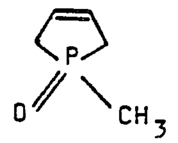

und

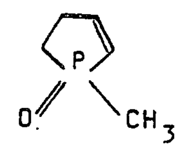

mit einer Reinheit von mind. 98 %. Das Produkt ist eine gelb-bräunliche Flüssigkeit ; die Dichte (bei 20 °C) beträgt 1,12 g/ml ; die Siedetemperatur liegt bei 150-155 °C/33 mbar.

4. 2-Methyl-2-oxo-1,2-oxaphospholan (Hoechst Aktiengesellschaft, Frankfurt/Main)

Es handelt sich um die Verbindung

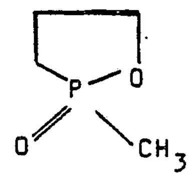

mit einer Reinheit von ca. 95 %. Das Produkt ist eine farblose Flüssigkeit mit einer Dichte von 1,19 g/ml. Die Siedetemperatur liegt bei 89 °C/1,5 mbar.

5. 2-Methyl-2,5-dioxo-1,2-oxaphospholan (Hoechst Aktiengesellschaft, Frankfurt/Main)

Es handelt sich um die Verbindung

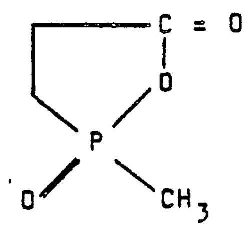

mit einer Reinheit von 95-98 %. Das Produkt stellt farblose Kristalle dar mit einem Schmelzpunkt von 102-104 °C.

## Beispiel 1

In einer Rührapparatur aus Glas wurden in 1 000 ml Xylol 250 g ®Exolit 422 suspendiert ; dann wurde eine Lösung von 15 g ®Caradate 30 in 100 ml Xylol eingetropft. Anschließend wurde die Suspension zum schwachen Sieden erhitzt und tropfenweise mit einer Lösung von 0,06 g eines Carbodiimidisierungskatalysators [z. B. Isomerengemisch von 1-Methyl-1-oxo-phospholen (Firma Hoechst Aktiengesellschaft, Frankfurt/Main)] in 50 ml Xylol versetzt. Nach einer Nachrührzeit von 2 Stunden wurde auf Raumtemperatur abgekühlt und filtriert. Der erhaltene Filterkuchen wurde bei 130 °C im Stickstoffstrom getrocknet. Es wurden 258 g beschichtetes Ammoniumpolyphosphat mit einem Polycarbodiimidanteil von 3,9 Masse% erhalten.

Zur Bestimmung der wasserlöslichen Anteile wurden 10 g des hergestellten Produktes in 100 ml Wasser suspendiert und die Suspension 20 min bei 25 °C gerührt. Anschließend wurde der im Wasser ungelöste Anteil des Produktes innerhalb von 40 Minuten durch Zentrifugieren sedimentiert. Von der überstehenden klaren Lösung wurden 5,0 ml in eine zuvor gewogene Aluminiumschale pipettiert und bei 120 °C im Trockenschrank eingedampft. Aus der Menge des Verdampfungsrückstandes wurde der wasserlösliche Anteil berechnet. Das Ergebnis ist in Tabelle 1 dargestellt.

## Beispiel 2

Es wurde analog Beispiel 1 verfahren, wobei jedoch eine Lösung von 30 g ®Caradate 30 in 100 ml Xylol sowie eine Lösung von 0,12 g 1-Methyl-1-oxo-phopholen (Isomerengemisch) in 50 ml Xylol eingesetzt wurden. Es wurden 270 g beschichtetes Ammoniumpolyphosphat mit einem Polycarbodiimidanteil von 8,8 Masse% erhalten.

Die ermittelten Werte für die wasserlöslichen Anteile sind in Tabelle 1 aufgeführt.

Beispiel 3

Es wurde analog Beispiel 1 verfahren, wobei jedoch eine Lösung von 45 g ®Caradate 30 in 100 ml Xylol sowie eine Lösung von 0,18 g 1-Methyl-1-oxo-phospholen (Isomerengemisch) in 50 ml Xylol eingesetzt wurden.

Es wurden 275 g beschichtetes Ammoniumpolyphosphat mit einem Polycarbodiimidanteil von 12,1 Masse% erhalten. Die ermittelten Werte für die wasserlöslichen Anteile sind in Tabelle 1 aufgeführt.

Beispiel 4

Es wurde analog Beispiel 1 verfahren, wobei jedoch eine Lösung von 60 g ®Caradate 30 in 100 ml Xylol sowie eine Lösung von 0,24 g 1-Methyl-1-oxo-phospholen (Isomerengemisch) in 50 ml Xylol eingesetzt wurden.

Es wurden 288 g beschichtetes Ammoniumpolyphosphat mit einem Polycarbodiimidanteil von 15,2 Masse% erhalten.

Die ermittelten Werte für die wasserlöslichen Anteile sind in Tabelle 1 aufgeführt.

Beispiel 5

In einer Rührapparatur aus Glas wurden 250 g ®Exolit 422 in 400 ml Aceton suspendiert ; dann wurden eine Lösung von 30 g ®Caradate 30 in 100 ml Aceton und eine Lösung von 0,03 g 1-Methyl-1-oxo-phospholen (Isomerengemisch) in 50 ml Aceton zugegeben. Anschließend wurde die Suspension zum schwachen Sieden erhitzt. Nach einer Nachrührzeit von 1 Stunde wurde auf Raumtemperatur abgekühlt und filtriert. Der erhaltene Filterkuchen wurde bei 100 °C im Stickstoffstrom getrocknet. Es wurden 255 g beschichtetes Ammoniumpolyphosphat mit einem Polycarbodiimidanteil von 5,6 Masse% erhalten.

Die ermittelten Werte für die wasserlöslichen Anteile sind in Tabelle 2 aufgeführt.

Beispiel 6

Es wurde analog Beispiel 5 verfahren, wobei jedoch eine Lösung von 0,15 g 1-Methyl-1-oxo-phospholen (Isomerengemisch) in 50 ml Aceton eingesetzt wurde. Es wurden 260 g beschichtetes Ammoniumpolyphosphat mit einem Polycarbodiimidanteil von 6,9 Masse% erhalten.

Die ermittelten Werte für die wasserlöslichen Anteile sind in Tabelle 2 aufgeführt.

Beispiel 7

Es wurde analog Beispiel 5 verfahren, wobei jedoch eine Lösung von 0,30 g 1-Methyl-1-oxo-phospholen (Isomerengemisch) in 50 ml Aceton eingesetzt wurde. Es wurden 263 g beschichtetes Ammoniumpolyphosphat mit einem Polycarbodiimidanteil von 7,8 Masse% erhalten.

Die ermittelten Werte für die wasserlöslichen Anteile sind in Tabelle 2 aufgeführt.

Beispiel 8

Es wurde analog Beispiel 5 verfahren, wobei jedoch eine Lösung von 0,60 g 1-Methyl-1-oxo-phospholen (Isomerengemisch) in 50 ml Aceton eingesetzt wurde. Es wurden 272 g beschichtetes Ammoniumpolyphosphat mit einem Polycarbodiimidanteil von 8,4 Masse% erhalten.

Die ermittelten Werte für die wasserlöslichen Anteile sind in Tabelle 2 aufgeführt.

Beispiel 9

Es wurde analog Beispiel 7 verfahren, wobei jedoch die Reaktionszeit auf 2 Stunden verlängert wurde. Es wurden 275 g beschichtetes Ammoniumpolyphosphat mit einem Polycarbodiimidanteil von 8,1 Masse% erhalten.

Die ermittelten Werte für die wasserlöslichen Anteile sind in Tabelle 3 aufgeführt.

Beispiel 10

Es wurde analog Beispiel 7 verfahren, wobei jedoch die Reaktionszeit auf 3 Stunden verlängert wurde. Es wurden 276 g beschichtetes Ammoniumpolyphosphat mit einem Polycarbodiimidanteil von 8,3 Masse% erhalten.

Die ermittelten Werte für die wasserlöslichen Anteile sind in Tabelle 3 aufgeführt.

### Beispiel 11

In einem beheizbaren emaillierten Druckreaktor (Inhalt : 16 l) mit Rührvorrichtung wurden 2 500 g ®Exolit 422 in 4 000 ml Aceton suspendiert ; dann wurden eine Lösung von 300 g ®Caradate 30 in 1 000 ml Aceton und eine Lösung von 3,0 g 1-Methyl-1-oxo-phospholen (Isomerengemisch) in 500 ml Aceton zugegeben. Anschließend wurde die Temperatur auf 80 °C erhöht. Dabei stellte sich ein Druck von 2,7 bar ein. Nach einer Nachrührzeit von 1 Stunde wurde auf Raumtemperatur abgekühlt und filtriert. Der erhaltene Filterkuchen wurde bei 100 °C im Stickstoffstrom getrocknet. Es wurden 2 850 g beschichtetes Ammoniumpolyphosphat mit einem Polycarbodiimidanteil von 8,5 Masse% erhalten.

Die ermittelten Werte für die wasserlöslichen Anteile sind in Tabelle 3 aufgeführt.

### Beispiel 12

Es wurde analog Beispiel 11 verfahren, wobei jedoch die Reaktionszeit auf 2 Stunden verlängert wurde. Es wurden 2 800 g beschichtetes Ammoniumpolyphosphat mit einem Polycarbodiimidanteil von 8,3 Masse% erhalten.

Die ermittelten Werte für die wasserlöslichen Anteile sind in Tabelle 3 aufgeführt.

### Beispiel 13

Es wurde analog Beispiel 11 verfahren, wobei jedoch die Reaktionstemperatur auf 100 °C erhöht wurde. Dabei stellte sich ein Druck von 3,8 bar ein. Es wurden 2 820 g beschichtetes Ammoniumpolyphosphat mit einem Polycarbodiimidanteil von 8,0 Masse% erhalten.

Die ermittelten Werte für die wasserlöslichen Anteile sind in Tabelle 3 aufgeführt.

### Beispiel 14

Es wurde analog Beispiel 5 verfahren, wobei jedoch eine Lösung von 1,20 g 2-Methyl-2-oxo-1,2-oxaphospholan in 50 ml Aceton eingesetzt wurde. Die Reaktionszeit wurde auf 4 Stunden verlängert. Es wurden 265 g beschichtetes Ammoniumpolyphosphat mit einem Polycarbodiimidanteil von 8,2 Masse% erhalten.

Die ermittelten Werte für die wasserlöslichen Anteile sind in Tabelle 4 aufgeführt.

### Beispiel 15

Es wurde analog Beispiel 5 verfahren, wobei jedoch eine Lösung von 2,40 g 2-Methyl-2-oxo-1,2-oxaphospholan in 50 ml Aceton eingesetzt wurde. Die Reaktionszeit wurde auf 4 Stunden verlängert. Es wurden 270 g beschichtetes Ammoniumpolyphosphat mit einem Polycarbodiimidanteil von 8,3 Masse% erhalten.

Die ermittelten Werte für die wasserlöslichen Anteile sind in Tabelle 4 aufgeführt.

### Beispiel 16

Es wurde analog Beispiel 5 verfahren, wobei jedoch eine Lösung von 1,20 g 2-Methyl-2,5-dioxo-1,2-oxaphospholan in 50 ml Aceton eingesetzt wurde. Die Reaktionszeit wurde auf 4 Stunden verlängert. Es wurden 250 g beschichtetes Ammoniumpolyphosphat mit einem Polycarbodiimidanteil von 8,3 Masse% erhalten.

Die ermittelten Werte für die wasserlöslichen Anteile sind in Tabelle 4 aufgeführt.

### Beispiel 17

In einem beheizbaren emaillierten Rührreaktor (Inhalt : 300 l) wurden 60 kg ®Exolit 422 in 100 l Aceton suspendiert ; dann wurden eine Lösung von 7,2 kg ®Caradate 30 in 18 l Aceton und eine Lösung von 144 g 1-Methyl-1-oxo-phospholen (Isomerengemisch) (2 % bezogen auf ®Caradate 30) in 2 l Aceton zugegeben. Anschließend wurde die Suspension zum Sieden erhitzt und 3 Stunden bei dieser Temperatur gehalten. Dann wurde auf Raumtemperatur abgekühlt und filtriert ; der erhaltene Filterkuchen wurde bei 100 °C im Stickstoffstrom getrocknet. Es wurden 64,5 kg beschichtetes Ammoniumpolyphosphat mit einem Polycarbodiimidanteil von 8,8 Masse% erhalten. Die wasserlöslichen Anteile betrugen 0,1 % bei 25 °C und 0,6 % bei 60 °C. Im Vergleich zum unbeschichteten ®Exolit 422 bedeutet dies eine Verringerung der wasserlöslichen Anteile um jeweils 99 %.

In Tabelle 5 sind die Werte der thermogravimetrischen Analyse angegeben.

(Siehe Tabellen Seite 7 ff.)

Tabelle 1

| Produkt | Gehalt an Polycarbodiimid (%) | Wasserlösliche Anteile (%) | | | |
|---|---|---|---|---|---|
| | | bei 25°C | Veränderung (%) | bei 60°C | Veränderung (%) |
| Beispiel 1 | 3,9 | 1,0 | - 88 | 11,3 | - 82 |
| Beispiel 2 | 8,8 | 0,8 | - 90 | 2,9 | - 95 |
| Beispiel 3 | 12,1 | 0,8 | - 90 | 3,6 | - 94 |
| Beispiel 4 | 15,2 | 2,0 | - 76 | 13,6 | - 78 |
| ® Exolit 422 1) | | 8,2 | | 62 | |

[1]) Zum Vergleich wurden die Werte für die unbeschichtete Handelsware (®Exolit 422, Hoechst Aktiengesellschaft, Frankfurt/Main) aufgeführt.

Tabelle 2

| Produkt | Katalysator-konzentration 1) (%) | Gehalt an Poly-carbodiimid (%) | Wasserlösliche Anteile (%) | | | |
|---|---|---|---|---|---|---|
| | | | bei 25°C | Veränderung (%) | bei 60°C | Veränderung (%) |
| Beispiel 5 | 0,1 | 5,6 | 1,8 | - 78 | 26 | - 58 |
| Beispiel 6 | 0,5 | 6,9 | 1,0 | - 88 | 19 | - 69 |
| Beispiel 7 | 1,0 | 7,8 | 0,8 | - 90 | 5,9 | - 91 |
| Beispiel 8 | 2,0 | 8,4 | 0,4 | - 95 | 1,7 | - 97 |
| ®Exolit 422 2) | - | - | 8,2 | - | 62 | - |

[1]) Diese Angaben beziehen sich auf das Verhältnis von Carbodiimidisierungskatalysator zur Menge an Polyisocyanat.

[2]) Zum Vergleich wurden die Werte für die unbeschichtete Handelsware (®Exolit 422, Hoechst Aktiengesellschaft, Frankfurt/Main) aufgeführt.

Tabelle 3

| Produkt | Gehalt an Polycarbodiimid (%) | Reaktionszeit (Std.) | Reaktionstemperatur (°C) | Wasserlösliche Anteile (%) bei 25°C | bei 60°C |
|---|---|---|---|---|---|
| Beispiel 7 | 7,8 | 1 | 56 | 0,80 | 5,9 |
| Beispiel 9 | 8,1 | 2 | 56 | 0,35 | 1,3 |
| Beispiel 10 | 8,3 | 3 | 56 | 0,20 | 1,1 |
| Beispiel 11 | 8,5 | 1 | 80 | 0,17 | 1,0 |
| Beispiel 12 | 8,3 | 2 | 80 | 0,12 | 0,9 |
| Beispiel 13 | 8,0 | 1 | 100 | 0,76 | 3,1 |

Tabelle 4

| Produkt | Katalysator | Katalysator-konzentration 1) (%) | Reaktions-zeit (Std.) | Gehalt an Poly-carbodiimid (%) | Wasserlösliche Anteile (%) bei 25°C | bei 60°C |
|---|---|---|---|---|---|---|
| Beispiel 9 | 1-Methyl-1-oxo-phospholen | 1 | 2 | 8,1 | 0,35 | 1,3 |
| Beispiel 14 | 2-Methyl-2-oxo-1,2-oxaphospholan | 4 | 4 | 8,2 | 0,7 | 8,1 |
| Beispiel 15 | 2-Methyl-2-oxo-1,2-oxaphospholan | 8 | 4 | 8,3 | 0,8 | 5,9 |
| Beispiel 16 | 2-Methyl-2,5-dioxo-1,2-oxaphospholan | 4 | 4 | 8,3 | 1,2 | 18,3 |

1) Diese Angaben beziehen sich auf das Verhältnis von Carbodiimidisierungskatalysator zur Menge an Polyisocyanat

Tabelle 5

| Produkt | Beschichtung | Gewichtsverlust (%) bei einer Temperatur von | | | | | |
|---|---|---|---|---|---|---|---|
| | | 300°C | 350°C | 400°C | 450°C | 500°C | 550°C |
| Beispiel 17 (erfindungsgemäß) | 8,8 % Polycarbodiimid | 0 | 3,1 | 5,5 | 8,6 | 12,5 | 18,8 |
| ®Exolit 456 [1)] | 9,4 % Melamin-Formaldehyd-Harz | 1,1 | 8,9 | 17,0 | 18,4 | 20,6 | 24,9 |

[1)] ®Exolit 456, Hoechst Aktiengesellschaft, Frankfurt/Main. Es handelt sich um ein mit Melamin-Formaldehyd-Harz beschichtetes ®Exolit 422.

Die Werte aus Tabellen 1-4 lassen erkennen, daß mit Hilfe der erfindungsgemäßen Modifizierungsmittel der Gehalt an wasserlöslichen Anteilen erheblich gesenkt werden kann (bei 25 °C um bis zu 99 %, bei 60 °C ebenfalls um bis zu 99 %).

Die Werte aus Tabelle 5 zeigen, daß die Beschichtung mit Polycarbodiimid zu einem modifizierten Ammoniumpolyphosphat mit deutlich höherer Thermostabilität führt.

**Patentansprüche**

1. Flammschutzmittel auf der Basis von freifließendem, pulverförmigem Ammoniumpolyphosphat der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 beträgt, dadurch gekennzeichnet, daß es aus

a) etwa 75 bis 99,5 Masse% Ammoniumpolyphosphat und

b) etwa 0,5 bis 25 Masse% eines Reaktionsproduktes aus einem Polyisocyanat mit einem Carbodiimidisierungskatalysator, wobei das Polycarbodiimid die einzelnen Ammoniumpolyphosphatteilchen umhüllt,

besteht.

2. Mittel nach Anspruch 1, dadurch gekennzeichnet, daß es eine mittlere Teilchengröße von etwa 0,01 bis 0,1 mm besitzt.

3. Mittel nach Anspruch 1 oder 2, dadurch gekennzeichnet, daß n eine ganze Zahl mit einem Durchschnittswert von 450 bis 800 ist.

4. Mittel nach Anspruch 1-3, dadurch gekennzeichnet, daß der Anteil des Polycarbodiimids 2 bis etwa 15 Masse% beträgt.

5. Verfahren zur Herstellung eines Flammschutzmittels nach einem der vorhergehenden Ansprüche, dadurch gekennzeichnet, daß man eine Suspension, welche aus einem Verdünnungsmittel und aus freifließendem, pulverförmigem Ammoniumpolyphosphat der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 beträgt, sowie aus einem Polyisocyanat und aus einem Carbodiimidisierungskatalysator besteht, während 0,5 bis 5 Stunden unter Rühren auf Temperaturen zwischen 30 bis 200 °C hält und anschließend abkühlt, filtriert und das nunmehr mit einem Polycarbodiimid mikroverkapselte Ammoniumpolyphosphat trocknet.

6. Verfahren nach Anspruch 5, dadurch gekennzeichnet, daß man die Suspension aus Verdünnungsmittel und Ammoniumpolyphosphat vorlegt und dieser Suspension Lösungen des Polyisocyanates und anschließend des Carbodiimidisierungskatalysators in dem Verdünnungsmittel langsam zugibt.

7. Verfahren nach einem der Ansprüche 5-6, dadurch gekennzeichnet, daß in der allgemeinen Formel des Ammoniumpolyphosphates n eine ganze Zahl mit einem Durchschnittswert von 450 bis 800 ist.

8. Verfahren nach einem der Ansprüche 5-7, dadurch gekennzeichnet, daß als Verdünnungsmittel Lösemittel auf Basis aromatischer, aliphatischer oder cycloaliphatischer Kohlenwasserstoffe sowie aliphatischer, aromatischer und gemischtaliphatischer/aromatischer Ketone, vorzugsweise Aceton, eingesetzt werden.

9. Verfahren nach einem der Ansprüche 5-8, dadurch gekennzeichnet, daß als Polyisocyanat handelsübliche aromatische oder aliphatische Di- und Polyisocyanate, vorzugsweise technisches 4,4'-Diphenylmethandiisocyanat (MDI), eingesetzt werden.

10. Verfahren nach einem der Ansprüche 5-9, dadurch gekennzeichnet, daß als Carbodiimidisierungskatalysator phosphororganische, inbesondere cyclische phosphororganische Verbindungen, vorzugsweise 1-Methyl-1-oxo-phospholen, eingesetzt werden.

11. Verfahren nach einem der Ansprüche 5-10, dadurch gekennzeichnet, daß in der Suspension ein Verhältnis von Ammoniumpolyphosphat : Verdünnungsmittel : Polyisocyanat : Carbodiimidisierungskatalysator wie 1 : 1,5-2,5 : 0,05-0,25 : 0,000 25-0,012 5, vorzugsweise wie 1 : 2 : 0,1 : 0,002, eingehalten wird.

12. Verfahren nach einem der Ansprüche 5-11, dadurch gekennzeichnet, daß die Reaktionszeit 1 bis 2 Stunden bei Temperaturen zwischen 50 bis 100 °C beträgt.

13. Verfahren nach einem der Ansprüche 5-12, dadurch gekennzeichnet, daß die Trocknung bei Temperaturen zwischen 80 bis 150 °C in Inertgasatmosphäre, vorzugsweise im Stickstoffstrom, erfolgt.

14. Verfahren nach einem der Ansprüche 5-13, dadurch gekennzeichnet, daß die erreichte mittlere Teilchengröße des mikroverkapselten Ammoniumpolyphosphates als Flammschutzmittel zwischen 0,01 und 0,1 mm, vorzugsweise zwischen 0,03 und 0,06 mm, beträgt.

15. Verfahren nach einem der Ansprüche 5-14, dadurch gekennzeichnet, daß der Anteil des

Polycarbodiimids im Flammschutzmittel 2 bis etwa 15 Masse% beträgt.

16. Verwendung des Mittels nach Anspruch 1-4 und hergestellt nach dem Verfahren gemäß einem der Ansprüche 5-15 zur flammwidrigen Einstellung von Polyurethanen bzw. Polyurethanschäumen, wobei der Gehalt des Mittels im Polyurethanschaum etwa 5 bis 25 Masse%, bezogen auf die Menge der Polyolkomponente des Polyurethans, beträgt.

**Claims**

1. Flame-retardant agent based on free flowing pulverulent ammonium polyphosphate of the general formula

$$H_{(n-m)+2}(NH_4)_mP_nO_{3n+1}$$

in which n stands for a whole number having an average value of about 20 to 800 and the ratio m/n is about 1, consisting of

a) about 75 to 99.5 wgt% ammonium polyphosphate and

b) about 0.5 to 25 wgt% of a reaction product of a polyisocyanate and a carbodiimidization catalyst, the polycarbodiimide encapsulating the individual ammonium polyphosphate particles.

2. Agent as claimed in claim 1, presenting a mean particle size of about 0.01 to 0.1 mm.

3. Agent as claimed in claim 1 or 2, wherein n stands for a whole number having an average value of 450 to 800.

4. Agent as claimed in any of claims 1-3, containing the polycarbodiimide in a proportion of 2 to about 15 wgt%.

5. Process for making a flame-retardant agent as claimed in any of the preceding claims which comprises : maintaining a suspension consisting of a diluent and free flowing pulverulent ammonium polyphosphate of the general formula

$$H_{(n-m)+2}(NH_4)_mP_nO_{3n+1}$$

in which n stands for a whole number having an average value of about 20 to 800 and the ratio m/n is about 1, as well as of a polyisocyanate and a carbodiimidization catalyst over a period of 0.5 to 5 hours while stirring at a temperature between 30 and 200 °C, then cooling and filtering it and drying the ammonium polyphosphate now microencapsulated in a polycarbodiimide.

6. Process as claimed in claim 5, wherein the suspension of diluent and ammonium polyphosphate is gradually admixed with a solution of the polyisocyanate and then with a solution of the carbodiimidization catalyst in the diluent.

7. Process as claimed in claim 5 or 6, wherein, in the general formula of the ammonium polyphosphate, n stands for a whole number having an average value of 450 to 800.

8. Process as claimed in any of claims 5-7, wherein the diluents used are solvents based on an aromatic aliphatic or cycloaliphatic hydrocarbon or an aliphatic, aromatic or mixed aliphatic/aromatic ketone, preferably acetone.

9. Process as claimed in any of claims 5-8, wherein the polyisocyanates are commercially available aromatic or aliphatic di- or polyisocyanate, preferably commercial 4,4'-diphenylmethanediisocyanate (MDI).

10. Process as claimed in any of claims 5-9, wherein the carbodiimidization catalysts are organophosphorus, especially cyclic organophosphorus compounds, preferably 1-methyl-1-oxa-phospholane.

11. Process as claimed in any of claims 5-10, wherein an ammonium polyphosphate/diluent/polyisocyanate/carbodiimidization catalyst-ratio of 1 : 1.5-2.5 : 0.05-0.25 : 0.000 25-0.0125, preferably 1 : 2 : 0.1 : 0.002, is maintained in the suspension.

12. Process as claimed in any of claims 5-11, wherein the reaction period is 1-2 hours at temperatures between 50 and 100 °C.

13. Process as claimed in any of claims 5-12, wherein the drying is effected at temperatures between 80 and 150 °C under inert gas, preferably in a stream of nitrogen.

14. Process as claimed in any of claims 5-13, wherein the mean particle size reached for the microencapsulated ammonium polyphosphate as a flame-retardant agent is between 0.01 and 0.1 mm, preferably between 0.03 and 0.06 mm.

15. Process as claimed in any of claims 5-14, wherein the flame-retardant agent contains 2 to about 15 wgt% polycarbodiimide.

16. Use of the agent as claimed in any of claims 1-4 and prepared by the process as claimed in any of claims 5-15 for conferring flame-retardant properties upon polyurethanes or polyurethane foams, the polyurethane foam containing the agent in a proportion of about 5-25 wgt%, based on the quantity of the polyol component of the polyurethane.

**Revendications**

1. Agent ignifugeant à base de polyphosphate d'ammonium pulvérulent fluide de formule générale

$$H_{(n-m)+2}(NH_4)_mP_nO_{3n+1}$$

dans laquelle n représente un nombre entier d'une valeur moyenne d'environ 20 à 800 et le rapport m/n est d'environ 1, caractérisé en ce qu'il est constitué par

a) environ 75 à 99,5 % en poids de polyphosphate d'ammonium et

b) environ 0,5 à 25 % en poids d'un produit de réaction d'un polyisocyanate avec un catalyseur de carbodiimidisation, le polycarbodiimide encapsulant les particules individuelles de polyphosphate d'ammonium.

2. Agent selon la revendication 1, caractérisé en ce qu'il présente une granulométrie moyenne d'environ 0,01 à 0,1 mm.

3. Agent selon la revendication 1 ou 2, caractérisé en ce que n est un nombre entier d'une valeur moyenne de 450 à 800.

4. Agent selon l'une des revendications 1 à 3, caractérisé en ce que la fraction de polycarbodiimide est de 2 jusqu'à environ 15 % en poids.

5. Procédé de préparation d'un agent ignifugeant selon l'une des revendications précédentes, caractérisé en ce que l'on maintient une suspension constituée par un diluant et un polyphosphate d'ammonium pulvérulent fluide de formule générale

$$H_{(n-m)+2}(NH_4)_mP_nO_{3n+1}$$

dans laquelle n représente un nombre entier d'une valeur moyenne d'environ 20 à 800 et le rapport m/n est d'environ 1, ainsi qu'un polyisocyanate et un catalyseur de carbodiimidisation, pendant 0,5 à 5 h sous agitation à des températures entre 30 et 200 °C, et ensuite on la refroidit, on filtre et on sèche le polyphosphate d'ammonium alors microencapsulé dans un polycarbodiimide.

6. Procédé selon la revendication 5, caractérisé en ce que l'on charge initialement la suspension de diluant et de polyphosphate d'ammonium et on ajoute lentement à cette suspension des solutions du polyisocyanate et ensuite du catalyseur de carbodiimidisation.

7. Procédé selon la revendication 5 ou 6, caractérisé en ce que, dans la formule générale du polyphosphate d'ammonium, n est un nombre entier d'une valeur moyenne de 450 à 800.

8. Procédé selon l'une des revendications 5 à 7, caractérisé en ce qu'on utilise comme diluants des solvants à base d'hydrocarbures aromatiques, aliphatiques ou cycloaliphatiques ainsi qu'à base de cétones aliphatiques, aromatiques et mixtes aliphatiques/aromatiques, de préférence l'acétone.

9. Procédé selon l'une des revendications 5 à 8, caractérisé en ce qu'on utilise comme polyisocyanates des di- et poly-isocyanates aromatiques ou aliphatiques du commerce, de préférence le diisocyanato-4,4'-diphénylméthane (DIM) du commerce.

10. Procédé selon l'une des revendications 5 à 9, caractérisé en ce qu'on utilise comme catalyseurs de carbodiimidisation des composés organophosphorés, en particulier des composés organophosphorés cycliques, de préférence le 1-méthyl-1-oxo-phospholène.

11. Procédé selon l'une des revendications 5 à 10, caractérisé en ce qu'on maintient dans la suspension un rapport polyphosphate d'ammonium/diluant/polyisocyanate/catalyseur de carbodiimidisation de 1 : 1,5-2,5 : 0,05-0,25 : 0,000 25-0,012 5, de préférence 1 : 2 : 0,1 : 0,002.

12. Procédé selon l'une des revendications 5 à 11, caractérisé en ce que la durée de réaction est de 1 à 2 h à des températures comprises entre 50 et 100 °C.

13. Procédé selon l'une des revendications 5 à 12, caractérisé en ce que l'on effectue le séchage à des températures comprises entre 80 et 150 °C en atmosphère de gaz inerte, de préférence dans un courant d'azote.

14. Procédé selon l'une des revendications 5 à 13, caractérisé en ce que le polyphosphate d'ammonium microencapsulé comme agent ignifugeant présente une granulométrie moyenne de 0,01 à 0,1 mm, de préférence de 0,03 à 0,06 mm.

15. Procédé selon l'une des revendications 5 à 14, caractérisé en ce que la fraction de polycarbodiimide dans l'agent ignifugeant est de 2 à environ 15 % en poids.

16. Utilisation de l'agent selon l'une des revendications 1 à 4 et préparé par le procédé selon l'une des revendications 5 à 15 pour l'ignifugeage de polyuréthannes ou de mousses de polyuréthannes, la teneur en agent dans la mousse de polyuréthanne étant d'environ 5 à 25 % en poids, rapportée à la quantité du composant polyol du polyuréthanne.